# EUROPEAN PATENT APPLICATION

(11) **EP 1 072 813 A1**
(43) Date of publication of application: **31.01.2001**
(21) Application number: 00830512.0
(22) Date of filing: 20.07.2000
(51) Int. Cl.: F16D 45/00

(54) **Mechanical unit with torque limiter, friction clutch and freewheel device for the automatic restoration of the operating state of the flywheel**

(30) Priority: 29.07.1999 IT FI990175
(71) Applicant: Bondioli, Edi, I-46029 Suzzara, Mantova (IT)
(72) Inventor: Bondioli, Edi, I-46029 Suzzara, Mantova (IT)
(74) Representative: Mannucci, Michele

(57) **Abstract**

The unit provides protection against concentrated stresses caused by the kinetic energy accumulated by a flywheel and permits the operating state thereof to be restored; the flywheel (5) is fitted on a transmission and torque-limiting coupling (10) with automatic re-engagement and is combined with a friction clutch (8) and with a free wheel device, in other words a unidirectional device (6).

## Description

The invention relates to a mechanical unit which is associated with a conventional flywheel to protect the components with which the flywheel is associated, and which allows the restoration of the operating state of the flywheel in an automatic manner, without complex and costly operations, such as for example the replacement of an appropriate bolt which may easily be sheared in the event of abnormal stresses and which has to be replaced on each occasion.

These and other objects and advantages will be apparent from the text that follows.

In the mechanical unit in question, the flywheel is fitted on a transmission and torque-limiting coupling or joint which transmits to the operating engine the motion derived from the kinetic energy accumulated in the flywheel; provided upstream of the flywheel are a friction clutch and a free-wheel device, i.e. a unidirectional device, which can be mutually coupled, for the actuation of the flywheel.

The transmission and torque-limiting coupling or joint is advantageously of the type able to disengage the driven member from the driving member upon exceeding a maximum value of the transmitted torque and to allow re-engagement at a lesser value of the relative velocity. Said coupling or joint may be of the type previously described in earlier patents of the same Applicant (Italy 1 286 633, United States 5 706 922 and Europe 0 733 820; Italy 1 286 703 and International WO 98/06959), and also in other applications simultaneous with the present application. Such a coupling is composed of an outer, driving member and an inner, driven member, and comprises: on the inner surface of said outer member, receptive recesses, parallel to the axis of rotation; in the inner member, substantially radial glide seats equal in number to said receptive recesses; in each of said substantially radial glide seats, a slider, able to glide radially and urged by elastic means in the centrifugal direction, and with an outer profile which is shaped and able to penetrate into one of said receptive recesses of the outer member to transmit a torque between said two outer and inner members and generate centripetal radial thrusts on the slider in order to obtain disengagement above a threshold value of the transmitted torque and for subsequent re-engagement below a predetermined relative velocity between the two members of the coupling.

The flywheel may be engaged by two opposing cap-like elements which are mounted by means of bearings on a sleeve of the driven member and surround the driven member; one of the elements of the friction clutch is combined with one of said cap-like elements, the other of which is associated with the freewheel device actuated by the power takeoff.

The friction clutch may have the element integral with the flywheel formed by two opposing friction surfaces between which extends a disk-like element which is actuated via the freewheel device and which is elastically gripped between said opposing friction surfaces.

The invention will be better understood by following the description and the attached drawing, which shows a non-limiting example of embodiment of said invention. In the drawing:
Fig. 1 shows a section through a plane of the drawn line I-I in Fig. 2;
Fig. 2 shows a cross section through the zone of the torque limiter and the flywheel;
Figs. 3, 4 and 5 are enlarged details of Fig. 2, which show different positions of the elements shown.

In the drawing, 1 designates the power takeoff of the transmission, and 3 diagrammatically designates the use of the kinetic energy in an operating engine, which requires the presence of a flywheel 5 (shown only in part) as an accumulator of kinetic energy which makes it possible to overcome peaks of power consumption by the user component, when temporary high resisting torques occur on the driven shaft 3A - which is connected to the flywheel. In the case of abnormal operation, mechanical failure or other exceptional events, the transmission from the flywheel 5 to the user component 3 is interrupted. The unit in question allows this interruption to take place instantaneously and with the possibility of fully automatic restoration, and in any event without complex manual operations, as required, for example, with the system using a shearing bolt for protection (which has to be replaced in order to restore the operating state).

In accordance with the solution shown, the power takeoff 1 is followed by a unidirectional, in other words free-wheel, transmission device generally indicated by 6, followed by a friction clutch 8, which in turn is followed by a torque-limiting joint or coupling 10, positioned at the center of the flywheel 5.

The freewheel device 6 comprises a discoidal flange 61 solidly fixed to the power takeoff 1 and possessing, on the inner front, a shaped portion with saw teeth 62; with this shaped portion 62 cooperate elastic pegs 63 accommodated in seats parallel to the main axis of rotation and machined in a driven member 66 axially coupled to the flange 61 but free to rotate relative thereto if not subject to the coupling actuated by the system 62, 63 of the free wheel 6.

The driven member 66 forms the driving disk member 81 of the friction clutch 8. The disk 81 is included between two friction surfaces formed by a cap 82 and by a flat ring 83. The torque limiter 10 (described in more detail below) comprising an outer member 101 engaged on the flywheel 5 by bolts 102 or other means, and an inner member 103 which is engaged on a boat 107 fitted on the driven shaft 3A. The outer member 103 is mounted by means of bearings 108 on the boat 107 and is supplemented by two opposing caps, one of which is the cap 82 and the other cap 102, both engaged on the outer member 101 by bolts 104.

The ring 83 is mounted glidingly on rods 85, accommodated in the outer member 101 of the torque limiter; the ring 83 is pressed against the disk 81 by springs 112 via a shaped ring 87 in order to obtain the contact pressure between the surfaces of the components 81, 82, 83; said pressure can readily be adjusted by acting upon the nuts 85A screwed onto the rods 85, against which nuts the springs 86 react. The elements 82, 66 and 61 are centered by means of bearings 89.

With regard to the said torque-limiting joint or coupling 10, an outer member is designated generically by 101 and an inner member by 103. The outer member 101 is the driving member, actuated by the power takeoff 1 by means of the freewheel device 6 and the friction clutch 8; said outer member 101 is of annular extent and fixedly secured to the flywheel 5 by bolts 102. The outer member 101 is supplemented by the caps 102 and 82 fixed thereto and supported by the bearings 108.

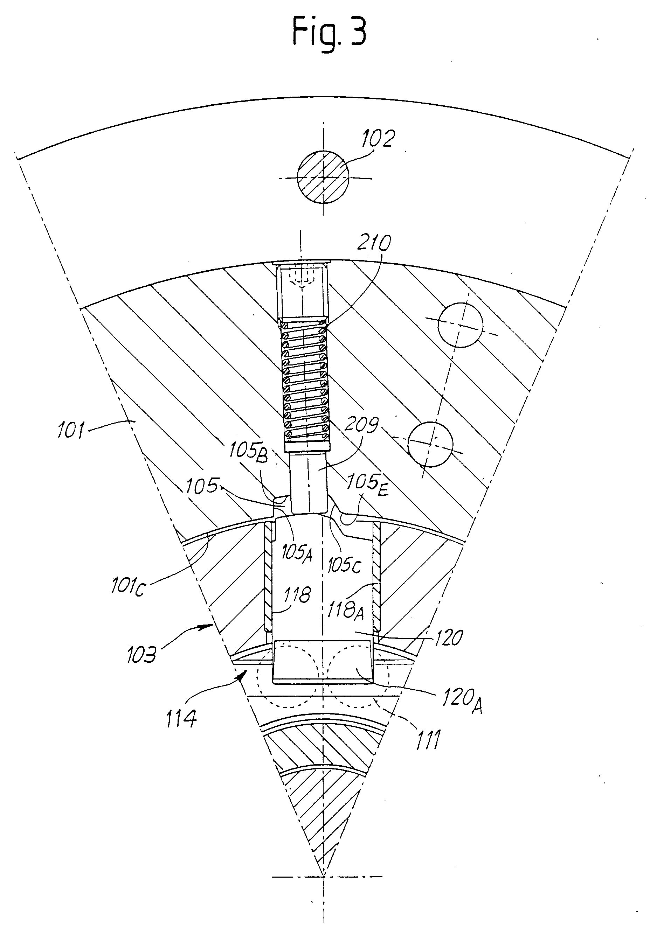

More specifically, the outer member 101 of the torque limiter 10 possesses an inner surface 101C in the shape of a circular cylinder. Recesses 105, mutually spaced angularly, extend from said inner surface 101C of the outer member 101; each of said recesses 105 exhibits (see Fig. 3) a first flank 105A of substantially radial extent, a bottom 105B having an extent substantially corresponding to that of the inner surface 101C of the member 101, a second flank 101C inclined with respect to a radial direction, and a junction 105E between the second flank 105C and said inner surface 101C.

The inner member 103, comprising two mutually coupled discoidal parts, is mounted on a sleeve 107 which accommodates the driven shaft 3A located downstream of the flywheel 5.

The inner member 103 is accommodated within the cylindrical surface 101C. The two components of the inner member 103 form seats in the form of blind holes, in each of which is accommodated asset of helical springs 111 acting upon two symmetrical discoidal elements 114, shaped with flanks 114A, 114B (see Figs. 3, 4 and 5) for the functions of the torque limiter 10.

The inner member 103 possesses a plurality of seats 118 for radial gliding equipped with a tubular sleeve 1881A capable of reducing friction; said glide seats 118 are mutually spaced angularly like the recesses 105. A slider 120 which has two shaped bases glides in a radial direction in each radial glide seat 118. The inner base possesses a wedge-shaped profile generally designated 120A.

The surfaces of the wedge-shaped profile (20A) of the sliders 120 are inclined correspondingly to the surfaces 114A, 114B of the discoidal elements 114; when assembly is complete, the wedge-shaped profiles 120A of each slider 120 penetrate between the two disk-like elements 114 and their surfaces are parallel to the surfaces 114A, 114B machined in the two discoidal elements 114.

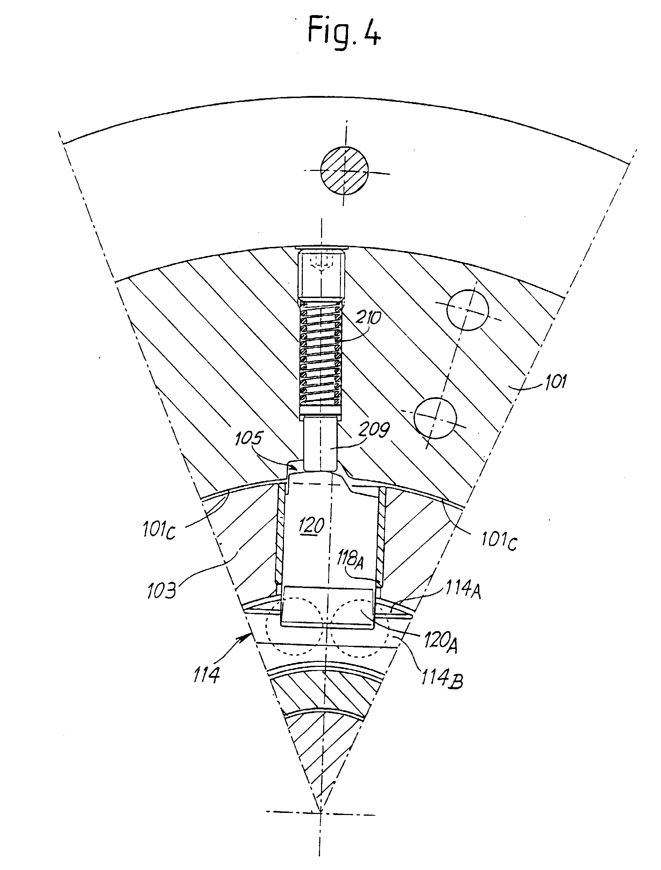

Each slider 120 exhibits (Figs. 3 and 4) an outer profile shaped substantially correspondingly with that of the recesses 105. In particular, the outer shaping exhibits a first substantially radial flank 120F which corresponds with the first flank 105A of the recess 105; an end surface 120G which extends substantially in a manner corresponding to the extent of the bottom 105B and of the surface 101C; a second flank 120H inclined substantially like the second flank 105C of the recess 105; and a junction 120L which extends between said end surface 120G and said second flank 120H and which has an orientation substantially corresponding to that of said junction 105E of the recesses 105.

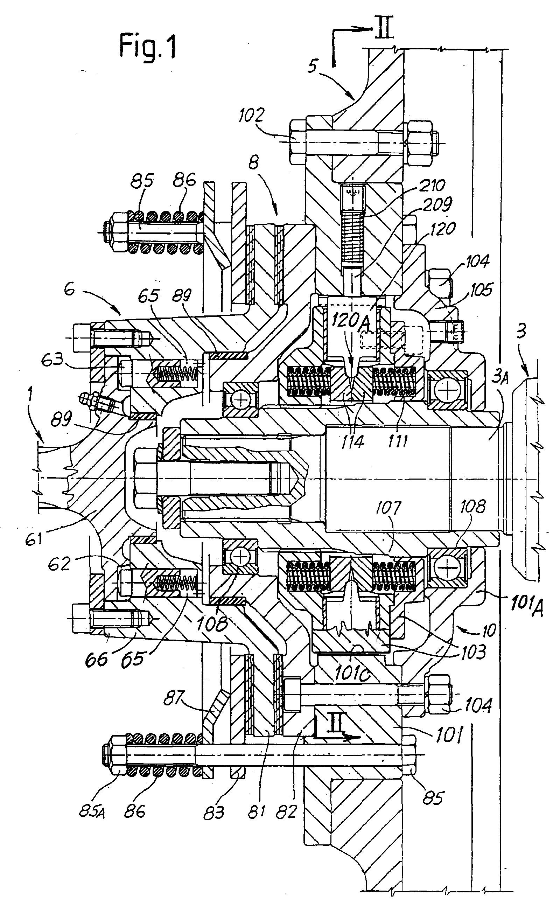

In the engagement conditions (Figs. 1, 2 and 4) all the sliders 120 are accommodated in the recesses 105. Transmission takes place by means of the thrust between the surfaces 105C and 120H, from the driving member towards the driven member.

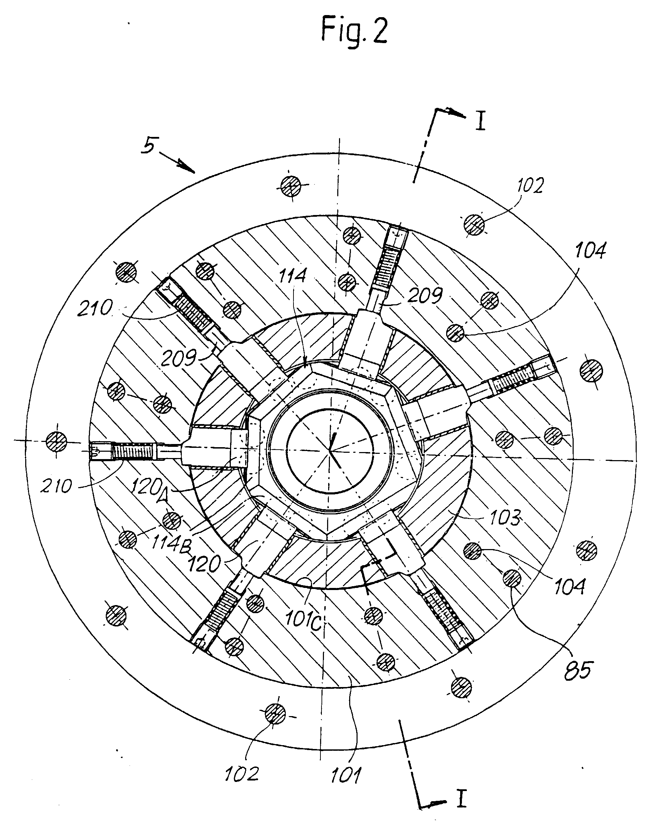

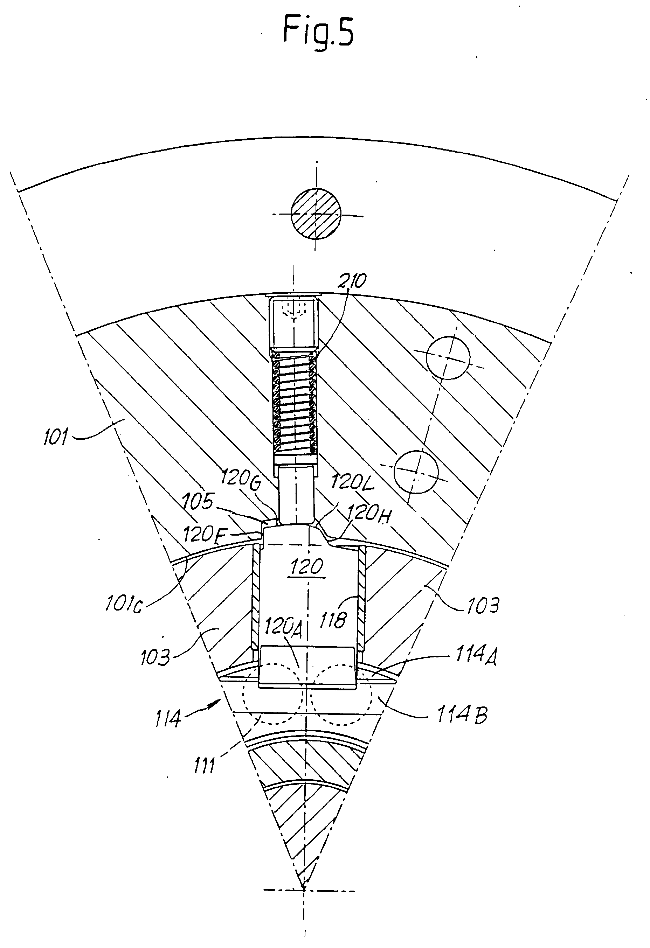

When the resisting torque exceeds a certain value, a thrust is generated between the inclined surfaces 120H and 105C, as a result of which a thrust in the centripetal direction is generated on the sliders 120, and the wedges 120A of the sliders 120 urge the two discoidal elements 114 in a direction such as to move them apart against the action of the antagonistic springs 111. When the resisting torque reaches the predetermined limit, the centripetal thrust on the sliders 120 is such that it overcomes the elastic reaction of the springs 111, causing the discoidal elements 114 to move apart until, from the position shown in Figs. 1, 2 and 4, they reach the position shown in Fig. 3, in which the sliders 120, with a centripetal movement, are caused to penetrate between the discoidal elements 114, causing them to move apart; in these conditions, the end surfaces 120G of the sliders 120 are in alignment with the inner surface 101C of the outer member 101 and the angular coupling between the two members 101 and 103 ceases, and hence it is possible to have relative angular gliding between the two members 101 and 103. Disengagement is thereby obtained between the two members of the torque-limiting joint or coupling 10 and a relative and relatively very fast rotation, as a result of which the sliders 120 do not tend to penetrate again into the recesses 105 which are in correspondence with said sliders, until such time as the relative velocity is substantially reduced. The tendency of the sliders 120 to penetrate into the recesses 105 is determined by the centrifugal components which the surfaces 114B exert on the sliders 120 through the effect of the elastic thrust of the springs 111, across the contacting surfaces 114B and 120A. While a high relative velocity is maintained between the two members 1 and 3, when a slider 20 passes in front of a recess 5 (Figs. 3 and 5) there is at most a slight impact between the surface of the junction 120L and the surface of the junction 105E, and hence the slider does not have time to penetrate into the recess 105 and continues its movement, passing over said recess 105. The passing of the recesses 105 by the sliders 120, without coupling taking place, occurs until such time as the relative tangential velocity between the two members 101 and 103 is reduced to a point such that the centrifugal thrust exerted by the springs 111 through the discoidal elements 114 on the sliders 120 causes the penetration of the sliders 120 into their respective recesses 105, to return from the position of disengagement shown in Fig. 3 to the position of engagement shown in Figs. 1 and 2. The reduction of the relative velocity may also be such as to reach the condition of rest, or at least of near-equality, between the velocities of the two members. Particularly noteworthy operation of the torque-limiting coupling is thus obtained, for the purposes of the dynamic requirements sought or desired for these devices.

In order to further reduce the difference in velocity between outer member 101 and inner member 103, to which the re-engagement of the torque limiter 10 corresponds, it is possible to resort to an arrangement - envisaged in another simultaneous patent in the name of the same Applicant - to create a further and direct obstacle to the penetration of the sliders 120 into the recesses 105, to reduce in an adjustable manner the relative velocity at which re-engagement between the outer member and the inner member 103 of the torque limiter 10 is obtained. According to what is shown in the drawing, in the outer member 101, corresponding to each of said recesses 105, at least one peg 209 is provided which is moveable in a substantially radial direction to project into the recess 105; elastic means 210 are accommodated in the outer member 101 and able to act on said peg 205 to urge it to project into the recess 205. The presence of the peg 209 elastically projecting into the recess (Fig. 3) tends to make the slider 120 pass on without causing it to penetrate into the recess 105 until such time as the relative velocity at which the slider passes in front of the recess has fallen below a limit that can be adjusted by means of the calibration of the compression of the spring 210. The object is thus achieved of obtaining re-engagement (Figs. 1 and 2) of the torque limiter 10 only when very limited stresses are present.

With mutually different angular spacings of the recesses 105 and, respectively, of the sliders 120, engagement is obtained only in a unique angular position between the two members 101 and 103 of the torque-limiting coupling 10, in accordance with an embodiment which is the subject of a simultaneous patent in the name of the same Applicant.

The provision of the differentiated angular distances between the recesses 5 and, correspondingly, between the sliders 20, and of the presence of the discoidal elements 14 on which the springs act, brings the advantage of avoiding, or at least greatly reducing, twisting and wear on the interacting surfaces of the coupling, in particular of the surfaces of the recesses 5 and of the sliders 20, during the conditions in which disengagement between the two members persists. Specifically, on the one hand the occasions on which each slider 20 is pushed away in passing in front of a recess are reduced, and on the other hand the springs 11 act on the sliders 20 to urge them to penetrate into the recesses 5 only when the reciprocal angular positioning between the members 1 and 3 is reached in which engagement can occur.

It is understood that the drawing shows only an example, given solely by way of a practical demonstration of the invention, said invention being capable of variation in shapes and arrangements without thereby departing from the scope of the concept underlying said invention. The presence of any reference numbers in the appended claims serves the purpose of facilitating reading of the claims with reference to the description and the drawing, and does not limit the scope of protection represented by the claims.

## Claims

1. A mechanical unit for protecting against concentrated stresses caused by the kinetic energy accumulated by a flywheel, characterized in that the flywheel (5) is fitted on a transmission and torque-limiting coupling or joint (10) which transmits to the operating engine the motion derived from the kinetic energy accumulated in the flywheel; and that there are provided upstream of the flywheel a friction clutch (8) and a free-wheel device, in other words a unidirectional device (6), which can be mutually coupled, for the actuation of the flywheel.

2. Unit as claimed in claim 1, characterized in that the transmission and torque-limiting coupling or joint (10) is of the type able to disengage the driven member from the driving member upon exceeding a maximum value of the transmitted torque and to allow re-engagement at a lesser value of the relative velocity.

3. Unit as claimed in claim 2, characterized in that said coupling or joint (10) is composed of an outer driving member (101) and an inner driven member (103), and comprises: on the inner surface (101C) of said outer member (101), receptive recesses (105), developed parallel to the axis of rotation; in the inner member (103), substantially radial glide seats (118), equal in number to said receptive recesses (105); in each of said substantially radial glide seats (118), a slider (120), able to glide radially and urged by elastic means in the centrifugal direction, and with an outer profile which is shaped and able to penetrate into one or other of said receptive recesses (105) of the outer member (101) to transmit a torque between said two outer and inner members and generate centripetal radial thrusts on the slider (120) in order to obtain disengagement above a threshold value of the transmitted torque and for subsequent re-engagement below a relative velocity between the two members of the coupling.

4. Unit as claimed at least in claim 1, characterized in that the flywheel (5) is engaged by two opposing cap-like elements (82, 102) which are mounted by means of bearings on a sleeve (107) of the driven member and surround the driven member; in that one of the elements of the friction clutch is combined with one (82) of said cap-like elements, the other (81) of which is associated with the freewheel device (6) bearing the power takeoff (1).

5. Unit as claimed in claim 4, characterized in that the friction clutch has the element solid with the flywheel (5) formed by two opposing friction surfaces (82, 83) between which extends a disk-like element (81) which is actuated via the freewheel device (6) and which is elastically gripped between said opposing friction surfaces (82, 83).

6. Mechanical unit with torque limiter, friction clutch and freewheel device for the automatic restoration of the operating state of the flywheel; all as described above and shown by way of example in the attached drawing.
